(19) **Europäisches Patentamt / European Patent Office / Office européen des brevets**

(11) **EP 4 194 420 A1**

(12) **EUROPEAN PATENT APPLICATION**
published in accordance with Art. 153(4) EPC

(43) Date of publication:
**14.06.2023 Bulletin 2023/24**

(21) Application number: **21869059.2**

(22) Date of filing: **04.08.2021**

(51) International Patent Classification (IPC):
$C04B\ 22/06^{(2006.01)}$     $C04B\ 22/08^{(2006.01)}$
$C04B\ 22/10^{(2006.01)}$     $C04B\ 22/14^{(2006.01)}$
$C04B\ 24/32^{(2006.01)}$     $C04B\ 28/02^{(2006.01)}$

(52) Cooperative Patent Classification (CPC):
C04B 22/06; C04B 22/08; C04B 22/10;
C04B 22/14; C04B 24/32; C04B 28/02

(86) International application number:
**PCT/JP2021/028944**

(87) International publication number:
**WO 2022/059372 (24.03.2022 Gazette 2022/12)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **17.09.2020 JP 2020156625**

(71) Applicant: **Denka Company Limited
Tokyo 103-8338 (JP)**

(72) Inventors:
• **MUROKAWA, Takamitsu
Tokyo 103-8338 (JP)**
• **MIZUNO, Hiroki
Tokyo 103-8338 (JP)**
• **NIKAIDO, Yasuyuki
Tokyo 103-8338 (JP)**
• **IWASAKI, Masahiro
Tokyo 103-8338 (JP)**
• **MISHIMA, Shunichi
Tokyo 103-8338 (JP)**

(74) Representative: **Ter Meer Steinmeister & Partner
Patentanwälte mbB
Nymphenburger Straße 4
80335 München (DE)**

(54) **LOW-DUST SPRAYED CONCRETE AND LOW-DUST SPRAYING METHOD USING SAME**

(57) Provided is an accelerator for spraying that can achieve a high quick-setting ability and a high initial strength development of levels equal to or higher than those achieved by an accelerator that contains materials, such as an alkali metal aluminate and an alkali metal hydroxide, even without the materials and even under a high temperature condition and that can be applied to a portion where a long-term strength development is required. A low-dust sprayed concrete containing a cement concrete that contains polyethylene oxide blended therein and an accelerator for spraying that does not substantially contain an alkali metal aluminate and an alkali metal hydroxide and contains calcium aluminate and aluminum sulfate blended therein, the accelerator for spraying having a content of the aluminum sulfate of 5 to 105 parts by mass relative to 100 parts by mass of the calcium aluminate, the aluminum sulfate having an alkaline earth metal content in terms of alkaline earth metal oxide of 0.007 to 4% by mass.

EP 4 194 420 A1

**Description**

Technical Field

The present invention relates to a low-dust sprayed concrete and a low-dust spraying method using the same.

Background Art

For reinforcement of natural ground in tunnel excavating work and stabilization of the excavated surface, concrete spraying is performed. There are a dry method in which compressed air fed from a compressor is supplied into a transport pipe for transporting concrete fed by a piston pump or the like to air-transport the concrete, and meanwhile a powder accelerator air-transported from accelerator feeding equipment is supplied into a branch pipe of a junction pipe, thus mixing the concrete and the accelerator, and then, the concrete is sprayed from a nozzle, and a wet method in which water is added in the way of air-transport of a dry-mix concrete, and meanwhile a powder accelerator air-transported from accelerator feeding equipment is supplied into a branch pipe of a junction pipe, thus mixing the concrete and the accelerator, and then, the concrete is sprayed from a nozzle.

In the spraying methods, since a large amount of dust may be generated when the air-transported concrete is sprayed, a method in which a powdery dust reducer, for example, such as a water-soluble cellulose and polyethylene oxide, is added to the concrete before kneading the concrete is proposed (see, for example, PTLs 1 and 2).

In addition, a method for reducing dust by spraying a cement composition in which a coated fine aggregate obtained by coating fine aggregate with cement is used is also proposed (see, for example, PTL 3).

However, a powdery dust reducer is needed to be increased in solubility, for example, by adjusting the polyethylene oxide to have an appropriate particle size. In addition, a powdery dust reducer is dissolved in surface water on aggregate in the concrete, and thus, is liable to adhere to an aggregate hopper to become a spherical shape in kneading, failing to achieve a sufficient dust preventing effect. In particular, when aggregate has a high content of surface water, the above problem is significant.

Thus, a powdery dust prevention agent containing an inorganic fine powder constituted of polyethylene oxide and talc and/or pyrophyllite is proposed (see, for example, PTL 4).

However, though the transportability of the powdery dust reducer from a hopper of a weighing machine and the safety are increased, the viscosity of the powdery dust reducer largely varies with the temperature change, leading to poor miscibility with an accelerator, which causes variation in the amount of dust generated and in the strength development in some cases.

On the other hand, known examples of the accelerator used together with the powdery dust reducer include a mixture of calcium aluminate, an alkali metal aluminate, an alkali metal carbonate, and the like; a mixture of burnt alum, an alkali metal aluminate, an alkali metal carbonate, and the like; a mixture of calcium aluminate and $3CaO \cdot SiO_2$; a mixture of slaked lime, an alkali metal aluminate, and an alkali metal carbonate (see, for example, PTLs 5 to 9).

The accelerators have a function to accelerate cement setting, and are each mixed with a cement concrete to be sprayed on a natural ground surface.

A typical method for adding an accelerator is a method causing a large amount of dust due to powder mixing through air-transport. Accordingly, the working environment may be deteriorated so that the work in spraying has to be performed with protection glasses, a dust mask, and the like. Thus, a method with a lower amount of dust has been demanded. As a method with a lower amount of dust generated, a method is proposed in which an accelerator made into a slurry form is added to and mixed with a cement concrete, and then, a solution of an alkali metal aluminate is separately force-fed, followed by mixing and spraying (see, for example, PTL 10). This method has a problem of deterioration in workability because handleability is poor due to a high alkaline liquid to be used and thus, protection glasses, gloves, and the like are needed in spraying.

Thus, an accelerator by a combination of an amorphous calcium aluminate and a crystalline calcium aluminate is proposed (see, for example, PTL 11). PTL 11 clearly states that, by further using sodium aluminate together at a low temperature, a better effect can be achieved. However, in recent years, in accelerators, from the viewpoint of ablepsia and chemical injury due to strong alkali, it has been preferred that strong alkaline raw materials, such as an alkali metal aluminate and an alkali metal hydroxide, are used as little as possible, but there are currently still many problems in terms of the high temperature condition, the cost, and the like.

Citation List

Patent Literature

PTL 1: JPS58-15056A
PTL 2: JP2004-189529A
PTL 3: JP2000-72503A
PTL 4: JP2009-78934A
PTL 5: JPS60-4149B
PTL 6: JPS64-051351A
PTL 7: JPS56-27457B
PTL 8: JPS61-026538A
PTL 9: JPS63-210050A
PTL 10: JPH05-139804A
PTL 11: JP5026928B

Summary of Invention

Technical Problem

In general, a strong alkaline material in an accelerator has high reactivity with cement and may have poor miscibility with a cement concrete containing a dust reducer blended therein, and thus, variation in the strength development of sprayed concrete and in the amount of dust generated is liable to occur. Accordingly, strong alkaline materials are difficult to apply.

The present invention has an object to provide, with respect to a cement concrete containing a dust reducer blended therein, a low-dust sprayed concrete which can achieve a high quick-setting ability, a high initial strength development, and a high miscibility with a cement concrete of levels equal to or higher than those achieved by an accelerator containing the materials even without using materials, such as an alkali metal aluminate and an alkali metal hydroxide, in an accelerator and even under a high temperature condition, and in which variation in the amount of dust generated by the environmental temperature does not occur, and which can be applied to a portion in which a long-term strength development is required, and to provide a low-dust spraying method using the low-dust sprayed concrete.

Solution to Problem

As a result of various studies for solving the above problem, the present inventors have conceived the present invention as described below and have found that the problem can be solved. Specifically, the present invention is as follows.

[1] A low-dust sprayed concrete containing a cement concrete that contains polyethylene oxide blended therein and an accelerator for spraying that does not substantially contain an alkali metal aluminate and an alkali metal hydroxide and contains calcium aluminate and aluminum sulfate blended therein, the accelerator for spraying having a content of the aluminum sulfate of 5 to 105 parts by mass relative to 100 parts by mass of the calcium aluminate, the aluminum sulfate having an alkaline earth metal content in terms of alkaline earth metal oxide of 0.007 to 4% by mass.

[2] The low-dust sprayed concrete according to [1], in which the aluminum sulfate has a CaO content of 0.005 to 2% by mass and an MgO content of 0.002 to 2% by mass.

[3] The low-dust sprayed concrete according to [1] or [2], further containing an alkaline earth metal hydroxide in an amount of 5 to 105 parts by mass relative to 100 parts by mass of the calcium aluminate.

[4] The low-dust sprayed concrete according to any of [1] to [3], further containing at least one selected from the group consisting of an alkali metal carbonate, an alkaline earth metal carbonate, and an alkaline earth metal sulfate.

[5] The low-dust sprayed concrete according to [4], in which the alkali metal carbonate is contained in an amount of 1 to 30% by mass.

[6] The low-dust sprayed concrete according to any of [1] to [5], in which the aluminum sulfate has a percentage of aluminum sulfate having a particle diameter of 10 pm or less of 1 to 40% by mass.

[7] The low-dust sprayed concrete according to any of [1] to [6], in which the aluminum sulfate is a hydride that has the number of hydrated water molecules of 4 to 12.

[8] The low-dust sprayed concrete according to any of [1] to [7], in which the polyethylene oxide has a mass average molecular weight of 100,000 to 5,000,000.

[9] A low-dust spraying method including

transporting a cement concrete and an accelerator for spraying that are to be contained in the low-dust sprayed concrete according to any one of [1] to [8] into a mixing pipe each by compressed air,
mix-joining the cement concrete and the accelerator for spraying in the mixing pipe, and then

discharging, from a spraying nozzle, and spraying the cement concrete and the accelerator for spraying mix-joined.

[10] The low-dust spraying method according to [9], in which the cement concrete is transported by the compressed air 4 m or more before being mixed with the accelerator for spraying, is transported by compressed air 1.5 m or more after being mix-joined with the accelerator for spraying, and is discharged from the spraying nozzle and is sprayed.

Advantageous Effects of Invention

According to the present invention, it is possible to provide a low-dust sprayed concrete that can achieve a low variation, a high quick-setting ability, and a high initial strength development of levels equal to or higher than those achieved by an accelerator that contains materials, such as an alkali metal aluminate and an alkali metal hydroxide, even without the materials and even under a high temperature condition, and that can be applied to a portion in which a long-term strength development is required and a reduced amount of dust generated is required, and to provide a low-dust spraying method using the low-dust sprayed concrete.

In addition, as compared with a low-dust sprayed concrete containing at least any one of an alkali metal aluminate and an alkali metal hydroxide, a higher safety in handling is also secured.

Description of Embodiments

[Low-dust sprayed concrete]

A low-dust sprayed concrete according to an embodiment of the present invention is obtained by blending a cement concrete and an accelerator for spraying.

<Cement concrete>

A cement of the cement concrete is not particularly limited. Examples thereof include various Portland cements, such as an ordinary, a high-early-strength, an ultra-high-early-strength, a moderate-heat, and a low-heat cement, filler cements obtained by mixing blast furnace slag, fly ash, and limestone fine powder into the Portland cements, and environmentally friendly cements (eco-cements) produced from municipal wastes incineration aches or sewage sludge incineration ashes as a raw material, and these can also be used after pulverization into fine powder. The ratio of an admixture and a cement in a mixed cement is not particularly limited, and a cement having such an admixture mixed in an amount assumed in JIS or a higher amount can also be used.

The cement concrete of this embodiment contains a cement and an aggregate, and the aggregate is preferably one having a low water absorption and a high aggregate strength. The aggregate is not particularly limited as long as spraying can be performed. As a fine aggregate, river sand, mountain sand, sea sand, limestone sand, silica sand, and the like can be used. As a coarse aggregate, river gravel, mountain gravel, and limestone gravel, and the like can be used. Crushed sand and crushed stone can also be used.

The cement concrete to be contained in the low-dust sprayed concrete of the present invention contains polyethylene oxide as a dust reducing component. Polyethylene oxide, if having a high mass average molecular weight, tends to increase the viscosity of a concrete and to worsen the miscibility with an accelerator, and the dust reducing performance is thus deteriorated. With a low molecular weight, polyethylene oxide cannot be involved with the concrete viscosity and the dust reducing performance is thus deteriorated. Thus, in the present invention, the mass average molecular weight of polyethylene oxide is preferably 100,000 to 5,000,000, more preferably 300,000 to 4,000,000, and further preferably 500,000 to 3,000,000.

The mass average molecular weight of polyethylene oxide can be determined by a gel permeation chromatograph (GPC) measurement according to the following measurement conditions.

<Measurement conditions>

- Apparatus: product name "LC-10AD" (manufactured by Shimadzu Corporation)
- Detector: differential refractive index detector (RID)
- Column: product name "SHODEX KF-804" (manufactured by Showa Denko K. K.)
- Measurement temperature: 30°C

- Eluent: THF
- Flow rate: 1.0 mL/min
- Sample concentration: 0.2% by mass (THF)
- Sample injection: 100 pL
- Conversion standard: polyethylene oxide

The content of the polyethylene oxide according to this embodiment as described above is, for example, preferably 0.004 to 0.090 parts by mass, more preferably 0.006 to 0.085 parts by mass, and further preferably 0.008 to 0.080 parts by mass relative to 100 parts by mass of the cement in the cement concrete. When the content of the polyethylene oxide is the lower limit or more, a dust reducing performance is easily achieved. When the content of the polyethylene oxide is the upper limit or less, the miscibility with an accelerator for spraying is increased to improve properties of adhesion in a very initial stage, making it possible to suppress rebounding.

<Accelerator for spraying>

The accelerator for spraying to be contained in a low-dust sprayed concrete according to an embodiment of the present invention does not substantially contain any alkali metal aluminate and any alkali metal hydroxide, and contains calcium aluminate and aluminum sulfate. Since any alkali metal aluminate and any alkali metal hydroxide are not substantially contained, handleability is good and protection glasses, gloves, and the like are not needed in spraying, and thus a high safety can be secured without deteriorating the workability.

Here, examples of the alkali metal aluminate include sodium aluminate and potassium aluminate, and examples of the alkali metal hydroxide include sodium hydroxide and potassium hydroxide. The "substantially not contain" refers to a content less than the lower detection limit by an XRF measurement, which is specifically 0 ppm.

On the other hand, when the content of aluminum sulfate is 5 to 105 parts by mass relative to 100 parts by mass of the calcium aluminate and the alkaline earth metal content in the aluminum sulfate is 0.007 to 4% by mass in terms of alkaline earth metal oxide, a high quick-setting ability and a high initial strength development can be achieved even under a high temperature condition substantially without containing an alkali metal aluminate and an alkali metal hydroxide.

The miscibility of an accelerator for spraying with a cement concrete can be evaluated by a standard deviation which shows a variation in numerical values of proctor penetration value measured at 10 points according to ASTM C403. Since a lower standard deviation of the proctor penetration value indicates a better miscibility, the standard deviation is preferably 8.0 or less, more preferably 7.5 or less, and further preferably 7.0 or less.

This embodiment will be described in detail below. In this description, the part and % are indicated by mass unless otherwise defined.

(Calcium aluminate)

Calcium aluminate is a generic name of crystalline and/or non-crystalline substances having a hydration activity that contain CaO and $Al_2O_3$ as main components, and is obtained by mixing a raw material containing calcia, a raw material containing alumina, and the like, subjecting the mixture to a heat treatment, such as firing in a kiln or melting in an electric furnace, followed by rapid cooling or gradual cooling. Calcium aluminate is a substance in which CaO and $Al_2O_3$ are partially substituted with an alkali metal oxide, an alkaline earth metal oxide, silicon oxide, titanium oxide, iron oxide, an alkali metal halide, an alkaline earth metal halide, an alkali metal sulfate, an alkaline earth metal sulfate, or the like, or a substance containing CaO and $Al_2O_3$ as main components in which a small amount of such a substance as above is present in the form of a solid solution or is solely present as a contamination.

The particle size of the calcium aluminate in terms of a Blaine's specific surface area (according to JIS R 5201 (Physical Testing Methods for Cement), hereinafter also referred to as Blaine's value) is preferably 3,000 $cm^2/g$ or more, and more preferably 5,000 $cm^2/g$ or more. When the particle size is 3,000 $cm^2/g$ or more, the quick-setting ability and the initial strength development of a sprayed material in which an accelerator and a cement concrete are mixed can be improved.

From the viewpoints of the quick-setting ability and the initial strength development, the $CaO/Al_2O_3$ molar ratio in the calcium aluminate is preferably in the range of 2.0 to 2.6, and more preferably in the range of 2.2 to 2.4.

(Aluminum sulfate)

The aluminum sulfate of the present invention contains an alkaline earth metal, and the content (when there are two or more alkaline earth metals, the total amount thereof) thereof in terms of alkaline earth metal oxide is 0.007 to 4% by mass, and preferably 0.01 to 2% by mass.

The aluminum sulfate as described above can be obtained, for example, by mixing sulfuric acid that contains an alkaline earth metal compound, such as an alkaline earth metal oxide, as an impurity with aluminum hydroxide. In mixing as above, an alkaline earth metal compound, such as CaO or MgO, may be blended so as to give a desired content. That is, in the aluminum sulfate in this description, although CaO and MgO are detected together with aluminum sulfate in a fluorescent X-ray analysis, only a broad peak of aluminum sulfate is seen but no peak by which CaO and MgO can be identified is found in an X-ray diffraction (XRD) analysis. That is, although the aluminum sulfate contains calcium and magnesium, the aluminum sulfate can substantially be considered to be the same as aluminum sulfate.

The aluminum sulfate contributes, as a sprayed material, to the adhesion to a wall surface and the strength development in a very initial stage. In particular, the aluminum sulfate that contains an alkaline earth metal can impart a sufficient adhering ability even under normal temperature to low temperature environments and can prevent a notable decrease in the long-term strength under a high temperature environment. When the alkaline earth metal content in the aluminum sulfate in terms of oxide is less than 0.007% by mass, a long-term strength is hardly developed under a high temperature environment, and deterioration in the initial strength development may be large. Accordingly, such an alkaline earth metal content is not preferred. In addition, when the alkaline earth metal content in terms of oxide is more than 4% by mass, the initial strength is decreased, and the properties of setting are hardly developed regardless of the temperature environment. Accordingly, such an alkaline earth metal content is not preferred. In particular, the aforementioned action can be developed by using an aluminum sulfate that contains a prescribed amount of an alkaline earth metal-containing substance, and even when, for example, an alkaline earth metal oxide, such as calcium oxide or magnesium oxide, that is a commercially available reagent is subsequently added and mixed in addition to an aluminum sulfate that does not contain an alkaline earth metal-containing substance, the effect as above cannot be sufficiently obtained.

The "low temperature" in the "under a low temperature environment" refers to 5°C or lower, and the "high temperature" in the "under high temperature environment" refers to 25°C or higher.

Here, the alkaline earth metal refers to at least any of beryllium, magnesium, calcium, strontium, and barium.

The alkaline earth metal exists, together with the aluminum sulfate, as an alkaline earth metal alone or as an alkaline earth metal-containing substance, such as an alkaline earth metal compound, an alkaline earth metal-containing solid solution, or an alkaline earth metal-containing amorphous. A specific example of the coexisting state is a solid solution in the aluminum sulfate as an alkaline earth metal, an alkaline earth metal oxide (BeO, MgO, CaO, SrO, BaO, etc.), an alkaline earth metal hydroxide, an alkaline earth metal carbonate, or an alkaline earth metal oxide. An alkaline earth metal sulfate is preferably not contained.

The content of the aluminum sulfate is 5 to 105 parts, preferably 10 to 90 parts, and more preferably 20 to 80 parts relative to 100 parts of the calcium aluminate. With a content of the aluminum sulfate out of the range of 5 to 105 parts, the setting ability is decreased.

The CaO content in the aluminum sulfate is preferably 0.005 to 2% and the MgO content is preferably 0.002 to 2%. The CaO content is more preferably 0.01 to 1.5% and the MgO content therein is more preferably 0.008 to 1.5%.

The CaO content and the MgO content in the aluminum sulfate is, for example, can be adjusted by mixing a high purity aluminum hydroxide and sulfuric acid, without removal of CaO and/or MgO contained in the sulfuric acid, or with CaO and/or MgO intentionally added.

With a CaO content of 0.005% or more, a long-term strength under a high temperature condition is more easily achieved, and with a CaO content of 2% or less, deterioration in properties of setting is easily suppressed. With a MgO content of 0.002% or more, a long-term strength under a high temperature condition is more easily achieved, and with a MgO content of 2% or less, abnormal expansion under a high temperature condition is easily suppressed.

As the aluminum sulfate, anhydride to 14- to 18-hydrate can be used. Since 14- or higher hydrate cannot be pulverized in some cases, 12- or lower hydrate is preferred. With anhydride, properties of setting are deteriorated in some cases, and thus, 4- or higher hydrate is preferred. The aluminum sulfate is preferably 4- to 12-hydrate, that is, it is more preferred that the aluminum sulfate is a hydrate and the number of hydrated water molecules thereof is 4 to 12.

The number of hydrated water molecules may be achieved, for example, by dehydrating aluminum sulfate 18-hydrate with heat or the like so as to have a desired number of hydrated water molecules.

As a form of the aluminum sulfate, any forms as powder, such as a flake form, a rough powder, or a powdery form can be used. From the viewpoint of very initial strength development, a powdery form is preferred, and is further preferably adjusted so that the percentage of the particles having a particle diameter of 10 $\mu$m or less is 1 to 40%. When the percentage of the particles having a particle diameter of 10 pm or less is 1% or more, a very initial strength development is easily achieved, and when the percentage thereof is 40% or less, a long-term strength is more easily achieved. For allowing 1 to 40% of the particles to have a particle diameter of 10 pm or less, a sieve or the like may be used.

(Alkaline earth metal hydroxide)

The accelerator for spraying according to this embodiment preferably further contains an alkaline earth metal hydroxide. By containing an alkaline earth metal hydroxide, the long-term strength can be increased more.

The alkaline earth metal hydroxide refers to a hydroxide of, for example, beryllium, magnesium, calcium, strontium, or barium, and one or two or more of calcium hydroxide, strontium hydroxide, barium hydroxide, magnesium hydroxide, and radium hydroxide can be used. Among them, from the industrial viewpoint, such as the cost and handleability, calcium hydroxide or magnesium hydroxide is preferably used, and, for example, carbide residue produced as a byproduct in generating acetylene from calcium carbide can also be mentioned as calcium hydroxide. Regarding the particle size of the alkaline earth metal hydroxide, preferably the 250 pm residue is 30% or less, and more preferably the 250 pm residue is 10% or less.

The content of the alkaline earth metal hydroxide relative to 100 parts by mass of the calcium aluminate is preferably 2 to 120 parts by mass, more preferably 5 to 105 parts by mass, further preferably 5 to 100 parts by mass, and particularly preferably 10 to 50 parts by mass. When the content of the alkaline earth metal hydroxide is the lower limit or more, the properties of setting are hardly deteriorated. When the content of the alkaline earth metal hydroxide is the upper limit or less, the long-term strength can be favorable.

(Other components)

In the accelerator for spraying according to this embodiment, materials that are assumed in general accelerators may be blended, as required. An example is a substance selected from the group consisting of an alkali metal carbonate, an alkaline earth metal carbonate, and an alkaline earth metal sulfate, and at least one selected from the group consisting of an alkaline earth metal carbonate and an alkaline earth metal sulfate is preferred. The at least one selected from the group consisting of an alkaline earth metal carbonate and an alkaline earth metal sulfate is preferred in terms of contributing to an increase in long-term strength. The amount thereof in the accelerator for spraying is preferably 0.3 to 50% by mass, more preferably 0.6 to 45% by mass, and further preferably 1 to 40% by mass. Examples of the alkaline earth metal carbonate and alkaline earth metal sulfate include calcium carbonate and calcium sulfate.

For achieving a prescribed strength, particularly in a three-hour strength or a one-day strength, an alkali metal carbonate is preferably used. The amount of the alkali metal carbonate blended is preferably 0.3 to 50% by mass, more preferably 0.6 to 45% by mass, and further preferably 1 to 40% by mass in the accelerator for spraying. When the amount of the alkali metal carbonate blended is the lower limit or more, a desired strength can be easily achieved in the material-age three-hour strength or one-day strength. When the amount of the alkali metal carbonate blended is the upper limit or less, a long-term strength is easily achieved. Examples of the alkali metal carbonate include sodium carbonate and potassium carbonate.

The amount of the accelerator for spraying blended is preferably 5 to 30 parts by mass, more preferably 6 to 25 parts by mass, and further preferably 7 to 20 parts by mass relative to 100 parts by mass of the cement in the cement concrete. When the amount of the accelerator for spraying blended is the lower limit or more, the properties of adhesion, properties of setting, and strength development required in spraying are easily achieved. When the amount of the accelerator for spraying blended is the upper limit or less, a decrease in the long-term strength can be suppressed. The form of the accelerator for spraying according to this embodiment in blending into a cement concrete is not particularly limited, and examples thereof include a powder, a liquid, a suspension, and a slurry form.

[Low-dust spraying method]

The low-dust spraying method of the present invention can be a wet spraying method in which water is added to a cement concrete containing polyethylene oxide in a concrete manufacturing facility to adjust the concrete as a wet concrete and an accelerator for spraying is added thereto until immediately before spraying. As a spraying method, there is also dry spraying, but in the present invention, from the viewpoint of reducing the amount of dust generated, the method is preferably a wet spraying method.

In the low-dust spraying method of the present invention, after a cement concrete is transported in a fixed quantity with a concrete pump, compressed air by a pump is added to the cement concrete, and the cement concrete is transported into a mixing pipe by the compressed air. To the cement concrete, an accelerator for spraying is then added in the mixing pipe, and the cement concrete and the accelerator for spraying are mix-joined. In the low-dust spraying method of the present invention, the transport distance of from addition of the compressed air to the cement concrete to addition of the accelerator for spraying thereto is preferably 4 m or more, more preferably 5 m or more, and further preferably 6 m or more. When the transport distance of from addition of the compressed air to the cement concrete to addition of the accelerator for spraying thereto is the lower limit or more, variation in the strength development of the concrete after spraying is reduced and the dust reducing performance is also enhanced. Accordingly, such a transport distance is preferred. The transport distance of from addition of the compressed air to the cement concrete to addition of the accelerator for spraying thereto is preferably 20 m or less, more preferably 15 m or less, and further preferably 10 m or less. When the transport distance of from addition of the compressed air to the cement concrete to addition of the accelerator for spraying thereto is the upper limit or less, the cement concrete can be stably transported.

The cement concrete is transported in a fixed amount by the concrete pump, and is transported into the mixing pipe by compressed air by a pump. In the mixing pipe, the cement concrete is then mix-joined with the accelerator for spraying which is separately transported via another route by compressed air, and is then discharged from a spraying nozzle and is sprayed. The transport distance of from joining of the cement concrete and the accelerator for spraying to the spraying nozzle is preferably 1.5 m or more, more preferably 2.0 m or more, and further preferably 2.5 m or more. When the transport distance of from joining of the cement concrete and the accelerator for spraying to the spraying nozzle is the lower limit or more, the accelerator for spraying and the cement concrete can be mixed well, variation in the strength development is suppressed, and the dust reducing performance is also enhanced. Accordingly, such a transport distance is preferred. The transport distance from joining of the cement concrete and the accelerator for spraying to the spraying nozzle is preferably 10 m or less, more preferably 7.5 m or less, and further preferably 5 m or less. When the transport distance from joining of the cement concrete and the accelerator for spraying to the spraying nozzle is the upper limit or less, the cement concrete and the accelerator for spraying can be stably transported.

By using the low-dust sprayed concrete of the present invention, the amount of dust generated can be suppressed and variation in the amount of dust generated by the environmental temperature can also be suppressed. The environmental temperature at which spraying of a low-dust sprayed concrete is performed by the low-dust spraying method of the present invention is preferably 5°C or higher, more preferably 7°C or higher, and further preferably 10°C or higher. When the environmental temperature at which spraying of a low-dust sprayed concrete is performed is the lower limit or more, an appropriate strength development can be achieved and the dust reducing performance is also enhanced, and thus variation in generation of dust by the environmental temperature can be suppressed. The environmental temperature at which spraying of a low-dust sprayed concrete is performed by the low-dust spraying method of the present invention is preferably 40°C or lower, more preferably 35°C or lower, and further preferably 33°C or lower. When the environmental temperature at which spraying of a low-dust sprayed concrete is performed is the upper limit or less, an extreme level of strength development is not caused and an appropriate softness is exhibited, and thus the dust reducing performance is enhanced and variation in generation of dust by the environmental temperature can be suppressed.

In the low-dust spraying method of the present invention, in the section where the cement concrete is transported in a fixed amount by the concrete pump, which is then joined with the compressed air, which is then joined with the accelerator for spraying, and which is then sprayed, either a hose or a metal pipe can be used, and any material that is generally used can be used.

Examples

[Example 1]

Measurement methods of physical properties and materials used are as follows.

(Spraying test)

At a test temperature of 30°C, a cement concrete constituted of 360 kg of cement, 216 kg of water, 1,050 kg of sand, 650 kg of gravel, and 180 g of a dust reducing component A was prepared. The prepared cement concrete was pump-transported with a concrete pump (MKW-25SMT manufactured by SYMTEC Co., Ltd.) under a transporting condition of 12 $m^3$ per hour, and 10 $m^3$ per minute of compressed air was joined in the way to transport the cement concrete over a pipe length of 7 m. Then, an accelerator (accelerator for spraying) having a content ratio as shown in Table 1 was transported under a transporting condition of 4 $m^3$ per minute by compressed air, and was mix-joined with the cement concrete in an amount of 9 parts by mass relative to 100 parts by mass of the cement in the cement concrete, thus obtaining a low-dust sprayed concrete. After the cement concrete and the accelerator for spraying were mix-joined, the low-dust sprayed concrete was transported to the spraying nozzle over a piping length of 3 m, and then, was sprayed on an iron plate. Aproctor penetration value at 5 minutes after spraying the low-dust sprayed concrete was measured at 10 points according to ASTM C403, and the average and the standard deviation were determined. Compression strengths (JIS R 5201, the same applies to the following description) at material ages of 10 minutes, 3 hours, and 28 days after spraying were measured.

According to the methods as described below, a rebound ratio and an amount of dust at 10 m behind the sprayed portion were measured.

Each accelerator for spraying having a content ratio shown in Table 1 was prepared by mixing the materials.

(Rebound ratio)

On a simulated tunnel having an excavation section of 15 m$^2$, a low-dust sprayed concrete was sprayed for 3 minutes in an area in the range of 45° to 90° in the circumferential direction with a width of 1 m (a surface on which a spraying concrete was applied in advance and after hardening, the concrete was scraped off to make a smooth surface), and rebound during spraying was measured to determine a rebound ratio from a low-dust sprayed concrete used according to the following formula.

$$\text{Rebound ratio} = \text{fallen low-dust sprayed concrete (kg)} / \text{low-dust sprayed}$$
$$\text{concrete used in spraying (kg)} \times 100\ (\%).$$

The rebound ratio is preferably 20% or less.

(Amount of dust)

On a simulated tunnel having an excavation section of 15 m$^2$, a low-dust sprayed concrete was sprayed for 10 minutes in an area in the range of 45° to 90° in the circumferential direction with a width of 1 m (a surface on which a spraying concrete was applied in advance and after hardening, the concrete was scraped off to make a smooth surface), and during spraying, the amount of dust was measured every minute at a position 10 m behind the sprayed portion using a digital dust meter LD-3K2 manufactured by SIBATA SCIENTIFIC TECHNOLOGY LTD. The amount of dust (mg/m$^3$) was calculated from the count value counted by the dust meter and a mass conversion factor of 0.002.

(Materials used)

Cement: ordinary Portland cement, manufactured by Denka Company Limited
Sand: river sand, density: 2.64 g/cm$^3$, fineness modulus (F.M): 2.83
Gravel: river gravel, density: 2.67 g/cm$^3$
Water: tap water
Dust reducing component A: polyethylene oxide, mass average molecular weight: 1,800,000, commercial product
Calcium aluminate: CaO/Al$_2$O$_3$ molar ratio: 2.24, Blaine's specific surface area: 5,900 cm$^2$/g, CaO source: quick lime (CaO: 95%), Al$_2$O$_3$ source: natural bauxite (Al$_2$O$_3$: 85%), production method: melt in an electric furnace, rapidly cooled, and pulverized into glass powder, percentage of glass content: 90%, CaO and Al$_2$O$_3$: 96% in total
Alkaline earth metal hydroxide a: calcium hydroxide (industrial product), calcium hydroxide content: 98%, Blaine's specific surface area: 10,500 cm$^2$/g,
AS-i: aluminum sulfate containing 0.9% by mass of CaO and 0.7% by mass of MgO, and containing an alkaline earth metal in an amount in terms of alkaline earth metal oxide of 1.6 %, particle diameter of 10 pm or less: 20%, 8.5-hydrate

Table 1

| Accelerator for spraying | Content (parts by mass) | | | Proctor penetration test | | Compression strength (N/mm$^2$) | | | Rebound ratio (%) | Amount of dust (mg/m$^3$) | Remark |
|---|---|---|---|---|---|---|---|---|---|---|---|
| | Calcium aluminate | Calcium hydroxide | Aluminum sulfate | Average | Standard deviation | 10 minutes | 3 hours | 28 days | | | |
| 1-1 | 100 | 50 | 4 | 22.4 | 2.54 | 0.4 | 1.2 | 31.7 | 16.9 | 2.5 | Comparative Example |
| 1-2 | 100 | 50 | 5 | 28.1 | 2.66 | 0.7 | 2 | 31.1 | 16.7 | 1.9 | Example |
| 1-3 | 100 | 50 | 30 | 29.5 | 2.66 | 0.8 | 2 | 30.1 | 16.6 | 1.9 | Example |
| 1-4 | 100 | 50 | 50 | 30.1 | 2.73 | 0.7 | 1.9 | 28.1 | 16.4 | 1.8 | Example |
| 1-5 | 100 | 50 | 70 | 29.6 | 4.58 | 0.7 | 1.8 | 27.4 | 17.1 | 1.8 | Example |
| 1-6 | 100 | 50 | 100 | 28.9 | 6.28 | 0.7 | 1.8 | 26.4 | 17.6 | 1.9 | Example |
| 1-7 | 100 | 50 | 110 | 24.6 | 7.81 | 0.4 | 1.4 | 26.2 | 18.5 | 2 | Comparative Example |
| 1-8 | 100 | 0 | 50 | 28.4 | 4.84 | 0.6 | 1.7 | 22.4 | 19.1 | 1.8 | Example |

It is found from the test results shown in Table 1 that, when the amount of aluminum sulfate blended in the accelerator for spraying was 4 parts by mass, the setting ability is significantly decreased in both the beginning time and the ending time of setting, and the compression strength is also lower as compared with Examples. It is found that even when the amount of aluminum sulfate blended was 110 parts by mass, the setting time and the compression strength are poorer as compared with Examples. Based on the above results, the content of aluminum sulfate in the accelerator is preferably 5 to 105 parts by mass, and is particularly preferably 5 to 100 parts by mass.

[Example 2]

As Example 2, the same procedure as in Example 1 was performed except for changing the aluminum sulfate contained in the accelerator for spraying to those shown in Table 2.
The aluminum sulfate used contains an alkaline earth metal in an amount in terms of metal oxides of 0.006% to 4.5%. The abbreviations are shown below.

AS-ii: aluminum sulfate containing 0.003% by mass of CaO and 0.002% by mass of MgO and containing an alkaline earth metal in terms of alkaline earth metal oxide of 0.005%, particle diameter of 10 pm or less: 20%, 8.5-hydrate
AS-iii: aluminum sulfate containing 0.005% by mass of CaO and 0.002% by mass of MgO and containing an alkaline earth metal in terms of alkaline earth metal oxide of 0.007%, particle diameter of 10 pm or less: 20%, 8.5-hydrate
AS-iv: aluminum sulfate containing 0.006% by mass of CaO and 0.004% by mass of MgO and containing an alkaline earth metal in terms of alkaline earth metal oxide of 0.010%, particle diameter of 10 pm or less: 20%, 8.5-hydrate
AS-v: aluminum sulfate containing 0.8% by mass of CaO and 0.5% by mass of MgO and containing an alkaline earth metal in terms of alkaline earth metal oxide of 1.3%, particle diameter of 10 pm or less: 20%, 8.5-hydrate
AS-vi: aluminum sulfate containing 1 % by mass of CaO and 1 % by mass of MgO and containing an alkaline earth metal in terms of alkaline earth metal oxide of 2.0%, particle diameter of 10 pm or less: 20%, 8.5-hydrate
AS-vii: aluminum sulfate containing 1.3% by mass of CaO and 1.1% by mass of MgO and containing an alkaline earth metal in terms of alkaline earth metal oxide of 2.4%, particle diameter of 10 pm or less: 20%, 8.5-hydrate
AS-viii: aluminum sulfate containing 1.6% by mass of CaO and 1.8% by mass of MgO and containing an alkaline earth metal in terms of alkaline earth metal oxide of 3.4%, particle diameter of 10 pm or less: 20%, 8.5-hydrate
AS-ix: aluminum sulfate containing 2.1% by mass of CaO and 2.3% by mass of MgO and containing an alkaline earth metal in terms of alkaline earth metal oxide of 4.4%, particle diameter of 10 pm or less: 20%, 8.5-hydrate

Table 2

| Accelerator for spraying | Content (parts by mass) | | | | Proctor penetration test | | Compression strength $(N/mm^2)$ | | | Rebound ratio (%) | Amount of dust $(mg/m^3)$ | Remark |
|---|---|---|---|---|---|---|---|---|---|---|---|---|
| | Calcium aluminate | Calcium hydroxide | Aluminum sulfate type : content (parts by mass) | | Average | Standard deviation | 10 minutes | 3 hours | 28 days | | | |
| | | | Type | Amount | | | | | | | | |
| 2-1 | 100 | 50 | AS-ii | 50 | 21.5 | 6.24 | 0.4 | 1.3 | 24.1 | 19.2 | 2.4 | Comparative Example |
| 2-2 | 100 | 50 | AS-iii | 50 | 28.4 | 2.47 | 0.6 | 1.7 | 27.5 | 17.1 | 1.8 | Example |
| 2-3 | 100 | 50 | AS-iv | 50 | 28.8 | 2.67 | 0.6 | 1.7 | 27.7 | 16.8 | 1.8 | Example |
| 2-4 | 100 | 50 | AS-v | 50 | 29.4 | 2.87 | 0.7 | 1.9 | 28 | 16.6 | 1.8 | Example |
| 1-4 | 100 | 50 | AS-i | 50 | 30.1 | 2.73 | 0.7 | 1.9 | 28.1 | 16.4 | 1.8 | Example |
| 2-5 | 100 | 50 | AS-vi | 50 | 30.4 | 2.63 | 0.8 | 2.1 | 29.1 | 16.7 | 1.7 | Example |
| 2-6 | 100 | 50 | AS-vii | 50 | 31.1 | 3.41 | 0.9 | 2.1 | 29.6 | 16.8 | 1.7 | Example |
| 2-7 | 100 | 50 | AS-viii | 50 | 31.5 | 3.66 | 0.9 | 2 | 30.5 | 17.3 | 1.8 | Example |
| 2-8 | 100 | 50 | AS-ix | 50 | 22.4 | 5.67 | 0.4 | 1.4 | 31.4 | 19.4 | 2.3 | Comparative Example |

EP 4 194 420 A1

It is found from the test results shown in Table 2 that in Comparative Examples in which 0.005% of an alkaline earth metal in terms of alkaline earth metal oxide is contained, the beginning time and the ending time of Proctor are retarded as compared with Examples. The compression strength is also decreased. Similarly in Comparative Example in which 4.4% of an alkaline earth metal in terms of alkaline earth metal oxide is contained, both the Proctor and the compression strength are decreased as compared with Examples. Based on the above results, the aluminum sulfate in the accelerator preferably contains an alkaline earth metal in an amount of 0.007 to 4% in terms of alkaline earth metal oxide.

[Example 3]

As Example 3, the same procedure as in Example 1 was performed except for changing the formulation of the accelerator for spraying to those shown in Table 3.

Table 3

| Accelerator for spraying | Type : content (parts by mass) | | | Proctor penetration test | | Compression strength (N/mm$^2$) | | | Rebound ratio (%) | Amount of dust (mg/m$^3$) | Remark |
|---|---|---|---|---|---|---|---|---|---|---|---|
| | Calcium aluminate | Calcium hydroxide | Aluminum sulfate | Average | Standard deviation | 10 minutes | 3 hours | 28 days | | | |
| 3-1 | 100 | 5 | 50 | 29.1 | 4.31 | 0.5 | 1.5 | 27.9 | 17.8 | 1.9 | Example |
| 1-4 | 100 | 50 | 50 | 30.1 | 2.73 | 0.7 | 1.9 | 28.1 | 16.4 | 1.8 | Example |
| 3-2 | 100 | 70 | 50 | 31.4 | 2.86 | 0.8 | 1.7 | 27.5 | 16.1 | 1.9 | Example |
| 3-3 | 100 | 100 | 50 | 32.5 | 2.66 | 1 | 1.5 | 27.4 | 16.9 | 2 | Example |

Based on the above results, the content of calcium hydroxide in the accelerator is preferably set to 5 parts by mass to 100 parts by mass relative to 100 parts by mass of the calcium aluminate.

[Example 4]

As Example 4, the same procedure as in Example 1 was performed except for changing the aluminum sulfate contained in the accelerator for spraying to those shown in Table 4.

As the aluminum sulfate, those shown below were used.

AS-x: aluminum sulfate containing 0.004% by mass of CaO and 0.5% by mass of MgO and containing an alkaline earth metal in terms of alkaline earth metal oxide of 0.504%, particle diameter of 10 pm or less: 20%, 8.5-hydrate

AS-xi: aluminum sulfate containing 3% by mass of CaO and 0.5% by mass of MgO and containing an alkaline earth metal in terms of alkaline earth metal oxide of 3.5%, particle diameter of 10 pm or less: 20%, 8.5-hydrate

AS-xii: aluminum sulfate containing 0.5% by mass of CaO and 0.001% by mass of MgO and containing an alkaline earth metal in terms of alkaline earth metal oxide of 0.501%, particle diameter of 10 pm or less: 20%, 8.5-hydrate

AS-xiii: aluminum sulfate containing 0.5% by mass of CaO and 2% by mass of MgO and containing an alkaline earth metal in terms of alkaline earth metal oxide of 2.5%, particle diameter of 10 pm or less: 20%, 8.5-hydrate

Table 4

| Accelerator for spraying | Type : content (parts by mass) | | | | Proctor penetration test | | Compression strength (N/mm$^2$) | | | Rebound ratio (%) | Amount of dust (mg/m$^3$) | Remark |
|---|---|---|---|---|---|---|---|---|---|---|---|---|
| | Calcium aluminate | Calcium hydroxide | Aluminum sulfate | | Average | Standard deviation | 10 minutes | 3 hours | 28 days | | | |
| | | | Type | Amount | | | | | | | | |
| 2-2 | 100 | 50 | AS-iii | 50 | 28.4 | 2.47 | 0.6 | 1.7 | 27.5 | 17.1 | 1.8 | Examples |
| 2-3 | 100 | 50 | AS-iv | 50 | 28.8 | 2.67 | 0.6 | 1.7 | 27.7 | 16.8 | 1.8 | Examples |
| 1-4 | 100 | 50 | AS-i | 50 | 30.1 | 2.73 | 0.7 | 1.9 | 28.1 | 16.4 | 1.8 | Examples |
| 4-1 | 100 | 50 | AS-x | 50 | 29.1 | 3.04 | 0.5 | 1.3 | 27.2 | 18.9 | 2 | Examples |
| 4-2 | 100 | 50 | AS-xi | 50 | 30.3 | 3.15 | 0.5 | 1.4 | 28.2 | 19.5 | 2 | Examples |
| 4-3 | 100 | 50 | AS-xii | 50 | 29.5 | 4.24 | 0.5 | 1.3 | 27.5 | 18.6 | 1.9 | Examples |
| 4-4 | 100 | 50 | AS-xiii | 50 | 28.5 | 4.62 | 0.5 | 2.5 | 26.5 | 19.4 | 1.9 | Examples |

It can be seen from Table 4 that the amounts of alkaline earth metal oxides contained in the aluminum sulfate are preferably 0.005% by mass to 2% by mass of CaO and 0.002% by mass to 2% by mass of MgO.

[Example 5]

As Example 5, the same procedure as in Example 1 was performed except for producing an accelerator for spraying constituted of 100 parts by mass of the same calcium aluminate as in Example 1, 50 parts by mass of the alkaline earth metal hydroxide a, 50 parts by mass of aluminum sulfate (AS-i), and an alkaline earth metal carbonate and an alkaline earth metal sulfate of the types and amounts as shown in Table 5.
As the alkaline earth metal carbonate and the alkaline earth metal sulfate, those shown below were used.

Alkaline earth metal carbonate i: magnesium carbonate industrial product, Blaine's value: 2,800 cm²/g
Alkaline earth metal carbonate ii: calcium carbonate industrial product, Blaine's value: 3,000 cm²/g
Alkaline earth metal sulfate α: magnesium sulfate industrial product, Blaine's value: 3,500 cm²/g
Alkaline earth metal sulfate β: calcium sulfate industrial product, Blaine's value: 4,500 cm²/g

Table 5

| Accelerator for spraying | Type:content (% by mass) | | Proctor penetration test | | Compression strength (N/mm$^2$) | | | Rebound ratio (%) | Amount of dust (mg/m$^3$) | Remark |
|---|---|---|---|---|---|---|---|---|---|---|
| | Alkaline earth metal carbonate | Alkaline earth metal sulfate | Average | Standard deviation | 10 minutes | 3 hours | 28 days | | | |
| 5-1 | i:10 | - | 31.6 | 2.45 | 0.9 | 2.1 | 30.1 | 15.1 | 1.7 | Example |
| 5-2 | i:10 | $\alpha$:10 | 32.3 | 2.55 | 0.9 | 2.1 | 31.1 | 15.5 | 1.6 | Example |
| 5-3 | i:10 | $\beta$:10 | 31.7 | 2.53 | 1 | 2 | 30.8 | 15.8 | 1.7 | Example |
| 5-4 | ii:10 | - | 31.5 | 2.61 | 0.9 | 2.1 | 30.3 | 16.1 | 1.7 | Example |
| 5-5 | ii:10 | $\alpha$:10 | 31.5 | 2.71 | 0.9 | 2.1 | 29.8 | 16 | 1.7 | Example |
| 5-6 | ii:10 | $\beta$:10 | 31.9 | 2.65 | 1 | 2.1 | 29.9 | 15.9 | 1.8 | Example |
| 5-7 | - | $\alpha$:10 | 30.9 | 2.69 | 1 | 2.1 | 30.7 | 15.3 | 1.8 | Example |
| 5-8 | - | $\beta$:10 | 31.7 | 2.85 | 1.1 | 1.9 | 30.4 | 16.1 | 1.7 | Example |
| 1-4 | - | - | 30.1 | 2.73 | 0.7 | 1.9 | 28.1 | 16.4 | 1.8 | Example |

[Example 6]

As Example 6, the same procedure as in Example 1 was performed except for producing an accelerator for spraying constituted of 100 parts by mass of the same calcium aluminate as in Example 5, 50 parts by mass of the alkaline earth metal hydroxide a, 50 parts by mass of the aluminum sulfate (AS-i), 10 parts by mass of the alkaline earth metal carbonate ii, 10 parts by mass of the alkaline earth metal sulfate β, and an alkali metal carbonate of the type and amount as shown in Table 6.
As the alkali metal carbonate, those shown below were used.

Alkali metal carbonate i: sodium carbonate industrial product, sodium carbonate content: 98%, Blaine: 1,000 $cm^2$/g
Alkali metal carbonate ii: potassium carbonate industrial product, potassium carbonate content: 97%, Blaine: 1,500 $cm^2$/g
Alkali metal carbonate iii: lithium carbonate industrial product, lithium carbonate content: 98%, Blaine: 800 $cm^2$/g

Table 6

| Accelerator for spraying | Type : content (% by mass) | Proctor penetration test | | Compression strength ($N/mm^2$) | | | Rebound ratio (%) | Amount of dust ($mg/m^3$) | Remark |
|---|---|---|---|---|---|---|---|---|---|
| | Alkaline metal carbonate | Average | Standard deviation | 10 minutes | 3 hours | 28 days | | | |
| 5-6 | - | 31.9 | 2.65 | 1 | 2.1 | 29.9 | 15.9 | 1.8 | Example |
| 6-1 | i:1 | 32.7 | 2.42 | 1.3 | 2.2 | 28.1 | 16.1 | 1.8 | Example |
| 6-2 | i:30 | 31.6 | 2.04 | 1.4 | 2.5 | 26.7 | 16.4 | 1.8 | Example |
| 6-3 | i:32 | 28 | 1.86 | 0.7 | 1.5 | 25.1 | 18.7 | 2 | Example |
| 6-4 | ii:1 | 32.7 | 2.39 | 1.2 | 1.7 | 26.5 | 16.3 | 1.8 | Example |
| 6-5 | ii:30 | 32.4 | 2.24 | 1.2 | 1.8 | 26.8 | 16.1 | 1.8 | Example |
| 6-6 | ii:32 | 28.4 | 2.01 | 0.8 | 1.5 | 24.3 | 18.4 | 2 | Example |
| 6-7 | iii:1 | 31.8 | 2.51 | 1.2 | 1.6 | 25.3 | 16.7 | 1.7 | Example |
| 6-8 | iii:30 | 31.5 | 2.33 | 1.3 | 1.7 | 24.8 | 16.2 | 1.8 | Example |
| 6-9 | iii:32 | 28.4 | 2.21 | 0.9 | 1.6 | 25.3 | 18.3 | 2 | Example |
| 6-10 | 1:1, ii:1 | 32.6 | 1.97 | 1.3 | 2 | 27.8 | 16.3 | 1.8 | Example |
| 6-11 | ii:1, iii:1 | 32.4 | 1.86 | 1.3 | 1.8 | 28.4 | 16.4 | 1.8 | Example |
| 6-12 | i:1, ii:1, iii:1 | 32.9 | 1.93 | 1.4 | 1.8 | 28.2 | 15.8 | 1.9 | Example |
| 1-4 | - | 30.1 | 2.73 | 0.7 | 1.9 | 28.1 | 16.4 | 1.8 | Example |

[Example 7]

As Example 7, the same procedure as in Example 1 was performed except for changing the aluminum sulfate contained in the accelerator for spraying to those shown in Table 7.

As the aluminum sulfate, those shown below were used.

AS-xii: aluminum sulfate containing 0.9% by mass of CaO and 0.7% by mass of MgO and containing an alkaline earth metal in terms of alkaline earth metal oxide of 1.6%, particle diameter of 10 pm or less: 0.5%, 8.5-hydrate

AS-xiii: aluminum sulfate containing 0.9% by mass of CaO and 0.7% by mass of MgO and containing an alkaline earth metal in terms of alkaline earth metal oxide of 1.6%, particle diameter of 10 pm or less: 1.0%, 8.5-hydrate

AS-xiv: aluminum sulfate containing 0.9% by mass of CaO and 0.7 by mass of MgO and containing an alkaline earth metal in terms of alkaline earth metal oxide of 1.6%, particle diameter of 10 pm or less: 40%, 8.5-hydrate

AS-xv: aluminum sulfate containing 0.9% by mass of CaO and 0.7 by mass of MgO and containing an alkaline earth metal in terms of alkaline earth metal oxide of 1.6%, particle diameter of 10 pm or less: 41%, 8.5-hydrate

Table 7

| Accelerator for spraying | Content (parts by mass) | | | | Proctor penetration test | | Compression strength (N/mm$^2$) | | | Rebound ratio (%) | Amount of dust (mg/m$^3$) | Remark |
|---|---|---|---|---|---|---|---|---|---|---|---|---|
| | Calcium aluminate | Calcium hydroxide | Aluminum sulfate type : content (parts by mass) | | Average | Standard deviation | 10 minutes | 3 hours | 28 days | | | |
| | | | Type | Amount | | | | | | | | |
| 7-1 | 100 | 50 | AS-xii | 50 | 28.3 | 4.21 | 0.5 | 1.5 | 30.1 | 18.4 | 1.9 | Example |
| 7-2 | 100 | 50 | AS-xiii | 50 | 29.1 | 3.46 | 0.6 | 1.8 | 29.5 | 16.1 | 1.7 | Example |
| 1-4 | 100 | 50 | AS-i | 50 | 30.1 | 2.73 | 0.7 | 1.9 | 28.1 | 16.4 | 1.8 | Example |
| 7-3 | 100 | 50 | AS-xiv | 50 | 30.3 | 3.15 | 0.8 | 2.1 | 27.5 | 16.7 | 1.8 | Example |
| 7-4 | 100 | 50 | AS-xv | 50 | 32.2 | 4.81 | 0.8 | 2.1 | 25.4 | 19.2 | 2 | Example |

[Example 8]

As Example 8, the same procedure as in Example 1 was performed except for changing the aluminum sulfate contained in the accelerator for spraying to those shown in Table 7.

As the aluminum sulfate, those shown below were used.

AS-xvi: aluminum sulfate containing 0.9% by mass of CaO and 0.7% by mass of MgO and containing an alkaline earth metal in terms of alkaline earth metal oxide of 1.6%, particle diameter of 10 pm or less: 20%, 18-hydrate

AS-xvii: aluminum sulfate containing 0.9% by mass of CaO and 0.7% by mass of MgO and containing an alkaline earth metal in terms of alkaline earth metal oxide of 1.6%, particle diameter of 10 pm or less: 20%, 14-hydrate

AS-xviii: aluminum sulfate containing 0.9% by mass of CaO and 0.7% by mass of MgO and containing an alkaline earth metal in terms of alkaline earth metal oxide of 1.6%, particle diameter of 10 pm or less: 20%, 12-hydrate

AS-xix: aluminum sulfate containing 0.9% by mass of CaO and 0.7% by mass of MgO and containing an alkaline earth metal in terms of alkaline earth metal oxide of 1.6%, particle diameter of 10 pm or less: 20%, 10.5-hydrate

AS-xx: aluminum sulfate containing 0.9% by mass of CaO and 0.7% by mass of MgO and containing an alkaline earth metal in terms of alkaline earth metal oxide of 1.6%, particle diameter of 10 pm or less: 20%, 4.0-hydrate

AS-xxi: aluminum sulfate containing 0.9% by mass of CaO and 0.7% by mass of MgO and containing an alkaline earth metal in terms of alkaline earth metal oxide of 1.6%, particle diameter of 10 pm or less: 20%, anhydride

Table 8

| Accelerator for spraying | Content (parts by mass) | | | | Proctor penetration test | | Compression strength (N/mm$^2$) | | | Rebound ratio (%) | Amount of dust (mg/m$^3$) | Remark |
|---|---|---|---|---|---|---|---|---|---|---|---|---|
| | Calcium aluminate | Calcium hydroxide | Aluminum sulfate type : content (parts by mass) | | Average | Standard deviation | 10 minutes | 3 hours | 28 days | | | |
| | | | Type | Amount | | | | | | | | |
| 8-1 | 100 | 50 | AS-xvi | 50 | 28.1 | 3.89 | 0.5 | 1.6 | 26.6 | 18.3 | 2 | Example |
| 8-2 | 100 | 50 | AS-xvii | 50 | 28.5 | 2.88 | 0.5 | 2.1 | 27.8 | 16.7 | 1.9 | Example |
| 8-3 | 100 | 50 | AS-xviii | 50 | 28.8 | 2.84 | 0.8 | 2 | 27.4 | 17.1 | 1.9 | Example |
| 8-4 | 100 | 50 | AS-xix | 50 | 29.5 | 2.75 | 0.8 | 1.7 | 28.2 | 16.8 | 1.8 | Example |
| 1-4 | 100 | 50 | AS-i | 50 | 30.1 | 2.73 | 0.7 | 1.9 | 28.1 | 16.4 | 1.8 | Example |
| 8-5 | 100 | 50 | AS-xx | 50 | 30.6 | 2.73 | 0.6 | 1.8 | 27.6 | 16.2 | 1.8 | Example |
| 8-6 | 100 | 50 | AS-xxi | 50 | 31.5 | 4.01 | 0.5 | 1.5 | 27.1 | 17.9 | 2 | Example |

[Example 9]

As Example 9, the same procedure as in Example 1 was performed except for changing the dust reducing component contained in the cement concrete to those shown in Table 9.

As the dust reducing component, those shown below were used.

Dust reducing component B: polyethylene oxide, mass average molecular weight: 100,000, commercial product
Dust reducing component C: polyethylene oxide, mass average molecular weight: 1,000,000, commercial product
Dust reducing component D: polyethylene oxide, mass average molecular weight: 3,000,000, commercial product
Dust reducing component E: polyethylene oxide, mass average molecular weight: 5,000,000, commercial product
Dust reducing component F: polyethylene oxide, mass average molecular weight: 6,000,000, commercial product
Dust reducing component G: dust reducer containing methylcellulose as a main component, commercial product

Table 9

| Accelerator for spraying | Dust reducing component | Proctor penetration test | | Compression strength (N/mm²) | | | Rebound ratio (%) | Amount of dust (mg/m³) | Remark |
|---|---|---|---|---|---|---|---|---|---|
| | | Average | Standard deviation | 10 minutes | 3 hours | 28 days | | | |
| 9-1 | B | 32.6 | 2.14 | 0.7 | 1.9 | 28.4 | 16.7 | 2 | Example |
| 9-2 | C | 31.4 | 2.46 | 0.7 | 1.9 | 27.8 | 16.5 | 1.8 | Example |
| 1-4 | A | 30.1 | 2.73 | 0.7 | 1.9 | 28.1 | 16.4 | 1.8 | Example |
| 9-3 | D | 30 | 2.83 | 0.7 | 1.8 | 27.9 | 16.3 | 1.5 | Example |
| 9-4 | E | 29.1 | 3.41 | 0.7 | 1.8 | 26.8 | 16.2 | 1.4 | Example |
| 9-5 | F | 29.4 | 4.51 | 0.7 | 1.7 | 26.6 | 17.8 | 1.2 | Example |
| 9-6 | G | 28.4 | 6.13 | 0.6 | 1.5 | 24.1 | 16.4 | 2.9 | Comparative Example |
| 9-7 | not added | 29.9 | 2.77 | 0.8 | 1.8 | 29.4 | 17.1 | 5.6 | Comparative Example |

[Example 10]

As Example 10, the same procedure as in Example 1 was performed except for changing the content of the dust reducing component A contained in the cement concrete to those shown in Table 10.

Table 10

| Accelerator for spraying | Dust reducing component A content (% to cement amount) | Proctor penetration test | | Compression strength (N/mm²) | | | Rebound ratio (%) | Amount of dust (mg/m³) | Remark |
|---|---|---|---|---|---|---|---|---|---|
| | | Average | Standard deviation | 10 minutes | 3 hours | 28 days | | | |
| 10-1 | 0.005 | 28.7 | 2.45 | 0.7 | 1.9 | 29.1 | 18.3 | 2 | Example |
| 10-2 | 0.01 | 29.2 | 2.65 | 0.7 | 1.9 | 28.6 | 17.4 | 1.9 | Example |
| 1-4 | 0.05 | 30.1 | 2.73 | 0.7 | 1.9 | 28.1 | 16.4 | 1.8 | Example |
| 10-3 | 1 | 31.8 | 3.15 | 0.7 | 1.9 | 28.1 | 16.5 | 1.6 | Example |
| 10-4 | 1.5 | 31.9 | 3.42 | 0.6 | 1.7 | 27.6 | 16.8 | 1.6 | Example |
| 10-5 | 2 | 31.3 | 4.45 | 0.6 | 1.7 | 27.4 | 16.6 | 1.5 | Example |
| 10-6 | 3 | 28.4 | 6.45 | 0.6 | 1.6 | 26.9 | 16.4 | 1.5 | Example |

[Example 11]

As Example 11, the same procedure as in Example 1 was performed except for changing the distance of transport after joining compressed air with the cement concrete and before mixing the cement concrete with the accelerator for spraying to those shown in Table 11.

Table 11

| Accelerator for spraying | Distance from joining a concrete transported at a fixed amount with compressed air until mixing it with an accelerator (m) | Proctor penetration test | | Compression strength (N/mm²) | | | Rebound ratio (%) | Amount of dust (mg/m³) | Remark |
|---|---|---|---|---|---|---|---|---|---|
| | | Average | Standard deviation | 10 minutes | 3 hours | 28 days | | | |
| 1-4 | 3 | 31.4 | 6.66 | 0.5 | 1.6 | 30.1 | 20.1 | 2 | Example |
| 1-4 | 4 | 30.8 | 5.74 | 0.6 | 1.7 | 31.1 | 19.5 | 1.9 | Example |
| 1-4 | 7 | 30.1 | 2.73 | 0.7 | 1.9 | 28.1 | 16.4 | 1.8 | Example |
| 1-4 | 10 | 30.1 | 2.98 | 0.8 | 1.8 | 28.9 | 16.9 | 1.8 | Example |
| 1-4 | 15 | 30.5 | 3.04 | 0.8 | 1.9 | 29 | 17.5 | 1.8 | Example |
| 1-4 | 20 | 30.6 | 3.15 | 0.8 | 1.9 | 28.7 | 17.3 | 1.7 | Example |
| 9-7 | 7 | 29.9 | 2.77 | 0.8 | 1.8 | 29.4 | 17.1 | 5.6 | Comparative Example |

[Example 12]

As Example 12, the same procedure as in Example 1 was performed except for changing the distance of transport after mix-joining the cement concrete and the accelerator for spraying to those shown in Table 12.

Table 12

| Accelerator for spraying | Distance from mixing a concrete with an accelerator until discharging (m) | Proctor penetration test | | Compression strength (N/mm$^2$) | | | Rebound ratio (%) | Amount of dust (mg/m$^3$) | Remark |
|---|---|---|---|---|---|---|---|---|---|
| | | Average | Standard deviation | 10 minutes | 3 hours | 28 days | | | |
| 1-4 | 1 | 28.1 | 4.67 | 0.6 | 1.6 | 24.5 | 19.6 | 2.3 | Example |
| 1-4 | 1.5 | 28.7 | 4.11 | 0.6 | 1.7 | 26.7 | 17.8 | 2 | Example |
| 1-4 | 3 | 30.1 | 2.73 | 0.7 | 1.9 | 28.1 | 16.4 | 1.8 | Example |
| 1-4 | 3.5 | 30.4 | 2.61 | 0.8 | 1.9 | 28.5 | 16.4 | 1.6 | Example |
| 1-4 | 4 | 30.8 | 2.53 | 0.8 | 1.8 | 28.7 | 16.1 | 1.6 | Example |
| 1-4 | 5 | 31.3 | 2.23 | 0.9 | 1.8 | 29.4 | 19.1 | 1.5 | Example |
| 9-7 | 3 | 29.9 | 2.77 | 0.8 | 1.8 | 29.4 | 17.1 | 5.6 | Comparative Example |

[Example 13]

As Example 13, the same procedure as in Example 1 was performed except for changing the environmental temperature at which spraying was performed after mix-joining the cement concrete and the accelerator for spraying to those shown in Table 13.

Table 13

| Accelerator for spraying | Environmental temperature (°C) | Proctor penetration test | | Compression strength (N/mm$^2$) | | | Rebound ratio (%) | Amount of dust (mg/m$^3$) | Remark |
|---|---|---|---|---|---|---|---|---|---|
| | | Average | Standard deviation | 10 minutes | 3 hours | 28 days | | | |
| 1-4 | 10 | 24.5 | 2.44 | 0.5 | 1.5 | 28.7 | 19.1 | 1.8 | Example |
| 1-4 | 20 | 26.4 | 2.55 | 0.6 | 1.8 | 28.6 | 17 | 1.8 | Example |
| 1-4 | 30 | 30.1 | 2.73 | 0.7 | 1.9 | 28.1 | 16.4 | 1.8 | Example |
| 1-4 | 33 | 29.1 | 3.19 | 0.8 | 2.1 | 26.7 | 16.7 | 1.9 | Example |
| 9-7 | 10 | 29.9 | 2.49 | 0.5 | 1.5 | 27.8 | 22.1 | 4.3 | Comparative Example |
| 9-7 | 20 | 26.2 | 2.59 | 0.6 | 1.8 | 27.9 | 17.9 | 3.3 | Comparative Example |
| 9-7 | 30 | 29.9 | 2.77 | 0.8 | 1.8 | 29.4 | 17.1 | 5.6 | Comparative Example |
| 9-7 | 33 | 29.4 | 3.11 | 0.8 | 2.2 | 27.1 | 18.4 | 7.2 | Comparative Example |

Industrial Applicability

The accelerator for spraying of the present invention can be suitably used for a cement concrete to be sprayed on an exposed natural ground surface in a tunnel, on a slope, or the like on, for example, a road, a railroad, or a headrace channel.

**Claims**

1. A low-dust sprayed concrete comprising

   a cement concrete that contains polyethylene oxide, and
   an accelerator for spraying that does not substantially contain an alkali metal aluminate and an alkali metal hydroxide and contains calcium aluminate and aluminum sulfate,
   the accelerator for spraying having a content of the aluminum sulfate of 5 to 105 parts by mass relative to 100 parts by mass of the calcium aluminate, the aluminum sulfate having an alkaline earth metal content in terms of alkaline earth metal oxide of 0.007 to 4% by mass.

2. The low-dust sprayed concrete according to claim 1, wherein the aluminum sulfate has a CaO content of 0.005 to 2% by mass and a MgO content of 0.002 to 2% by mass.

3. The low-dust sprayed concrete according to claim 1 or 2, further comprising an alkaline earth metal hydroxide in an amount of 5 to 105 parts by mass relative to 100 parts by mass of the calcium aluminate.

4. The low-dust sprayed concrete according to any one of claims 1 to 3, further comprising at least one selected from the group consisting of an alkali metal carbonate, an alkaline earth metal carbonate, and an alkaline earth metal sulfate.

5. The low-dust sprayed concrete according to claim 4, wherein the alkali metal carbonate is contained in an amount of 1 to 30% by mass.

6. The low-dust sprayed concrete according to any one of claims 1 to 5, wherein the aluminum sulfate has a percentage of aluminum sulfate that has a particle diameter of 10 pm or less of 1 to 40% by mass.

7. The low-dust sprayed concrete according to any one of claims 1 to 6, wherein the aluminum sulfate is a hydride that has the number of hydrated water molecules of 4 to 12.

8. The low-dust sprayed concrete according to any one of claims 1 to 7, wherein the polyethylene oxide has a mass average molecular weight of 100,000 to 5,000,000.

9. A low-dust spraying method comprising

   transporting a cement concrete and an accelerator for spraying that are to be contained in the low-dust sprayed concrete according to any one of claims 1 to 8 into a mixing pipe each by compressed air,
   mix-joining the cement concrete and the accelerator for spraying in the mixing pipe, and then
   discharging, from a spraying nozzle, and spraying the cement concrete and the accelerator for spraying mix-joined.

10. The low-dust spraying method according to claim 9, wherein the cement concrete is transported by the compressed air 4 m or more before being mixed with the accelerator for spraying, and is transported by compressed air 1.5 m or more after being mix-joined with the accelerator for spraying, and is discharged from the spraying nozzle and is sprayed.

International application No.

PCT/JP2021/028944

**INTERNATIONAL SEARCH REPORT**

### A. CLASSIFICATION OF SUBJECT MATTER

C04B 22/06(2006.01)i; C04B 22/08(2006.01)i; C04B 22/10(2006.01)i; C04B 22/14(2006.01)i; C04B 24/32(2006.01)i; C04B 28/02(2006.01)i
FI:    C04B28/02; C04B24/32 A; C04B22/08 Z; C04B22/14 A; C04B22/06 Z; C04B22/10

According to International Patent Classification (IPC) or to both national classification and IPC

### B. FIELDS SEARCHED

Minimum documentation searched (classification system followed by classification symbols)
C04B7/00-C04B28/36, C01F7/32

Documentation searched other than minimum documentation to the extent that such documents are included in the fields searched

| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)
JSTPlus/JMEDPlus/JST7580 (JDreamIII)

### C. DOCUMENTS CONSIDERED TO BE RELEVANT

| Category* | Citation of document, with indication, where appropriate, of the relevant passages | Relevant to claim No. |
|---|---|---|
| A | JP 2000-302503 A (DENKI KAGAKU KOGYO KABUSHIKI KAISHA) 31 October 2000 (2000-10-31) | 1-10 |
| A | JP 5026928 B2 (TAIHEIYO MATERIALS CORPORATION) 19 September 2012 (2012-09-19) | 1-10 |
| A | JP 6586417 B2 (TAIHEIYO MATERIALS CORPORATION) 02 October 2019 (2019-10-02) | 1-10 |
| A | JP 59-39756 A (ONAHAMA SAKAI KAGAKU KK) 05 March 1984 (1984-03-05) | 1-10 |

☐ Further documents are listed in the continuation of Box C.  ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 02 September 2021 (02.09.2021) | 14 September 2021 (14.09.2021) |

| Name and mailing address of the ISA/ | Authorized officer |
|---|---|
| Japan Patent Office 3-4-3, Kasumigaseki, Chiyoda-ku, Tokyo 100-8915, Japan | |
| | Telephone No. |

Form PCT/ISA/210 (second sheet) (January 2015)

**INTERNATIONAL SEARCH REPORT**
Information on patent family members

International application No.

PCT/JP2021/028944

| Patent Documents referred in the Report | Publication Date | Patent Family | Publication Date |
|---|---|---|---|
| JP 2000-302503 A | 31 Oct. 2000 | (Family: none) | |
| JP 5026928 B2 | 19 Sep. 2012 | (Family: none) | |
| JP 6586417 B2 | 02 Oct. 2019 | WO 2015/182170 A1 AU 2015265201 A | |
| JP 59-39756 A | 05 Mar. 1984 | (Family: none) | |

Form PCT/ISA/210 (patent family annex) (January 2015)

**REFERENCES CITED IN THE DESCRIPTION**

**Patent documents cited in the description**

- JP S5815056 A
- JP 2004189529 A
- JP 2000072503 A
- JP 2009078934 A
- JP S604149 B
- JP S64051351 A
- JP S5627457 B
- JP S61026538 A
- JP S63210050 A
- JP H05139804 A
- JP 5026928 B